(19) Europäisches Patentamt
European Patent Office
Office européen des brevets

(11) Publication number: **0 515 178 B1**

## EUROPEAN PATENT SPECIFICATION

(45) Date of publication of patent specification: **19.07.95**

(51) Int. Cl.6: **B60C 9/00**, D07B 1/06

(21) Application number: **92304586.8**

(22) Date of filing: **20.05.92**

(54) **Pneumatic tyre.**

(30) Priority: **22.05.91 JP 148004/91**

(43) Date of publication of application:
**25.11.92 Bulletin 92/48**

(45) Publication of the grant of the patent:
**19.07.95 Bulletin 95/29**

(84) Designated Contracting States:
**DE FR GB**

(56) References cited:
EP-A- 0 317 636     EP-A- 0 414 892
EP-A- 0 433 962     EP-A- 0 462 716
WO-A-91/04370       FR-A- 1 293 015
US-A- 4 738 096     US-A- 4 836 262

(73) Proprietor: **SUMITOMO RUBBER INDUSTRIES
LIMITED**
**1-1 Tsutsuicho 1-chome**
**Chuo-ku**
**Kobe-shi**
**Hyogo-ken (JP)**

(72) Inventor: **Kawamura, Kazuhiko**
**3-16 Higashi-asagirioka**
**Akashi-shi,**
**Hyogo-ken (JP)**
Inventor: **Komatsuki, Masato**
**1-23 Hinokuchicho 1-chome**
**Nishinomiya-shi,**
**Hyogo-ken (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

**Description**

The present invention relates to a belted pneumatic tyre, in which the belt durability and the steering stability are greatly improved.

In general, radial tyres are provided with tread reinforcing belts. For such belts, a compact cord having a 1 x 3 structure has been widely used.

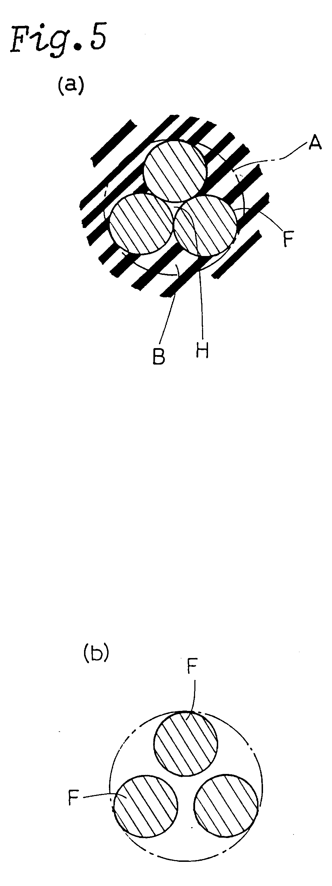

Such a compact cord is, as shown in Fig.5a, composed of three steel monofilaments which are twisted together compactly. That is, no gap is formed between the adjacent filaments. Therefore, a closed space H is formed at the centre of the cord, and topping rubber can not penetrate into this central space H. As a result, the central part of the surface of each monofilament is not covered by the topping rubber.

The uncovered parts are easily corroded by any water which penetrates the tyre tread portion due to damage and then corrosion is liable to spread quickly through the space H, which greatly reduces the tyre durability.

In order to avoid such exposure of the steel monofilament surface, a loose or open cord has been proposed, wherein the steel monofilaments F are loosely twisted together, as shown in Fig.5b. In such a cord the penetration of topping rubber is improved and the surfaces of the filaments can be covered more easily by the topping rubber because, when the cord tension is small, the gaps between the filaments are sufficiently large for the topping rubber to easily penetrate the cord.

However, because of the very large elongation of such a loose cord under a small load, when such loose cords are assembled in a raw tyre to provide a belt and the tyre is subsequently pressurised in the vulcanising process, the belt tends to elongate or deform unevenly, which results in poor finished tyre uniformity and also a belt rigidity which is decreased in the finished tyre.

As a result, steering stability, rolling resistance, tyre life and the like are greatly decreased.

Furthermore, if a tension is applied to the loose cord during rubberising of the cord, the gaps between the filaments becomes narrow or closed, which then causes the same problems of rubber penetration as in the original closed cord case. A tyre comprising the features of the preamble of claim 1 is is known, e.g. from US-A- 4 836 262.

It is therefore, the object of the present invention to provide a pneumatic tyre, in which the above-mentioned problems can be solved by improving the penetration of rubber into the belt cords.

According to the present invention, a pneumatic tyre comprises a carcass extending between bead portions of the tyre, and a belt disposed radially outside the carcass under a tread wherein the belt comprises reinforcing cords embedded in topping rubber, at an angle (theta) to the tyre equator and each of the belt cords comprise three steel monofilaments, characterised in that the three steel monofilaments include at least one waved steel monofilament and at least one unwaved steel monofilament, said at least one waved steel monofilament, said at least one unwaved steel monofilament, and the remaining steel filament being compactly twisted together so as to make alternate contacting portions and noncontacting portions between the at least one waved steel monofilament and at least one of the remaining two steel monofilaments, and the gap therebetween at each noncontacting portion is not more than 0.6 times the diameter of the waved steel monofilament.

An embodiment of the present invention will now be described, by way of example only, in conjunction with the accompanying drawings, in which:

Fig.1 is a cross sectional view of a tyre according to the present invention;

Fig.2 is a perspective view of a cord used for the belt thereof;

Fig.3 is a cross sectional view of an opened part of the belt cord;

Fig.4a is a plan view of a waved monofilament used in the belt cord;

Fig.4b is a plan view of an unwaved monofilament used in the belt cords;

Fig.5a is a cross sectional view of a prior art closed belt cord;

Fig.5b is a cross sectional view of an open or loose prior art belt cord;

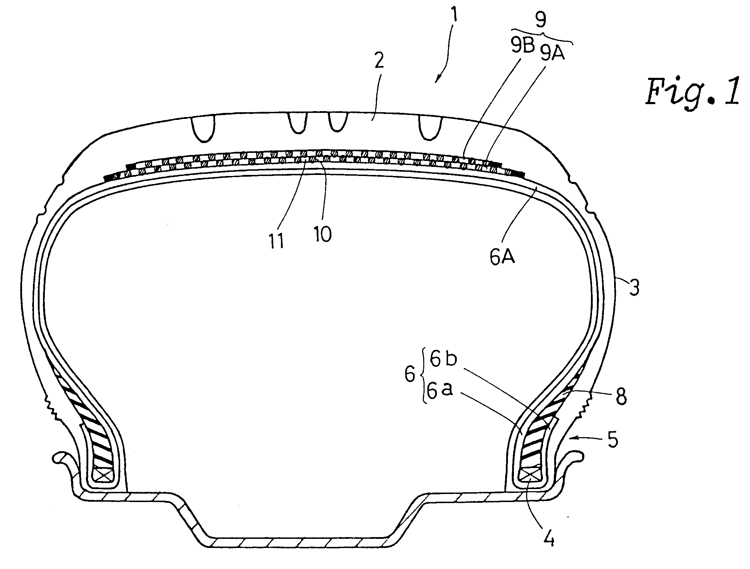

In Fig.1, a pneumatic tyre 1 has a tread 2, a pair of bead portions 5, and a pair of sidewalls 3 extending between the tread edges and the bead portions 5.

A bead core 4 is disposed in each bead portion 5, a carcass 6 extends between the bead portions 5 being turned up around each bead core 4 to form a carcass turned up portion 6b and a main carcass portion 6a, and a belt 9 (in this embodiment comprising two belt plies 9A and 9B) is disposed radially outside the carcass 6 under the tread 2.

The carcass 6 comprises at least one ply 6A of cords laid at 75 to 90 degrees with respect to the tyre equator.

Between the main carcass portion 6a and each of the turned up portions 6b, a bead apex 8 made of hard rubber is disposed. The bead apexes 8 extend taperingly radially outwardly from the bead cores 4 to reinforce the bead portion 5 and lower sidewall 3 and thus to increase the lateral stiffness of the tyre.

The carcass 6 in this embodiment is composed of one ply 6A of nylon fibre cords.

For the carcass, organic fibre cords, e.g. polyester, rayon, aromatic polyamide or the like, are preferably used. However, steel cords can be used.

In this embodiment, the radially inner belt ply 9A disposed on the carcass 6 is wider than the radially outer belt ply 9B disposed on the inner belt ply 9A. The belt 9 as a whole has enough width to reinforce the whole width of the tread 2.

Each of the belt plies 9A and 9B is made of parallel cords 10 embedded in topping rubber 11 and laid at an angle (theta) from 0 to 35 degrees with respect to the tyre equator, the two plies being arranged such that the cords in the inner belt ply 9A cross the cords in the outer belt ply 9B.

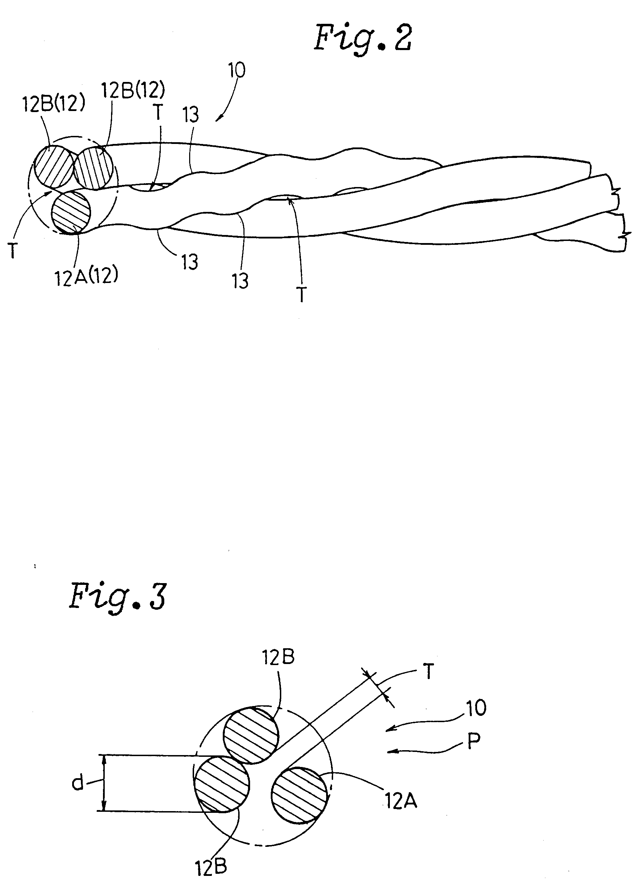

In the present invention, the belt cords 10 comprise three steel monofilaments 12 which are twisted together as shown in Fig.2, wherein at least one of the three steel monofilaments is waved, and at least one of the remaining two steel monofilaments is not waved.

Preferably, the belt cord 10 is composed of one waved monofilament 12A and two unwaved monofilaments 12B.

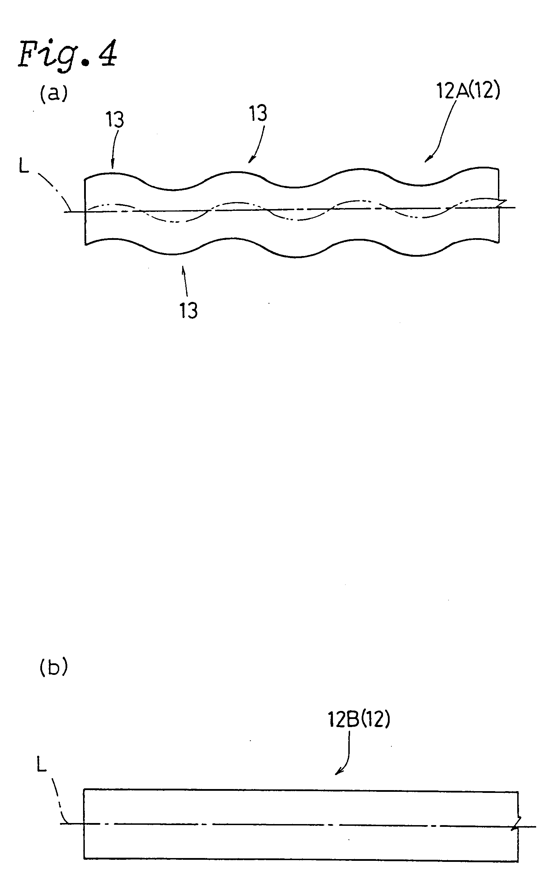

Fig.4a and Fig.4b show a waved monofilament 12A and an unwaved monofilament 12B, respectively, before they are twisted into a cord. As shown in Fig.4a, the waved monofilament 12A is waved in advance. As shown in Fig.4b, the unwaved monofilament 12B is straight.

Accordingly, when they are twisted together as shown in Fig.2 and Fig.3a, the resultant belt cord 10 has regions of no inter-filament contact, i.e. non-contacting portions P between the adjacent waved monofilament 12A and unwaved monofilament 12B. These occur along the length of the cord. Thus many openings or gaps T are formed, through which topping rubber may penetrate the central space of the cord.

The waved monofilament 12A can be waved two-dimensionally by bending a straight monofilament in a flat plane at small pitches.

Alternatively, the waved monofilament 12A can be waved three-dimensionally by coiling a straight monofilament at a small diameter and small pitches.

The wave pitches are preferably 0.31 to 0.70 times the final cord twist pitches.

The wave height (peak to peak) of the initial waved cord is preferably 1.5 to 2.5 times the diameter (d) of the monofilament 12A.

Generally, the diameters of the three monofilaments 12A and 12B are the same value (d), but they may be different.

In the present invention, the waved monofilament 12A and the unwaved monofilament 12B are twisted compactly so that the adjacent monofilaments generally contact each other. Accordingly, the elongation of the final cord is substantially smaller than that of the loose cord of the prior art.

The above mentioned gaps T at the noncontacting portions P is not more than 0.6 times the filament diameter d.

In order to best improve steering stability and tyre uniformity, it is preferable that the elongation of the belt cord 10 when tested at a 5 kgf load is less than 0.3%.

To achieve this and to provide the necessary strength for the belt, the diameter (d) of the steel monofilaments 12A and 12B is in the range from 0.20 to 0.35 mm, and more preferably 0.25 to 0.28 mm. The above-mentioned pitch of the waves is less than the cord twist pitch. The rubber compound used as the topping rubber 11 preferably has a complex elastic modulus E* of 45 to 150 kgf/cm$^2$.

Here, the complex elastic modulus E* is measured under the following conditions: 10% initial strain, 10 Hz sine wave with 2% amplitude, and at a temperature of 70 degrees C, using a test piece (4 mm width, 30 mm length, and 2 mm thickness), by a visco-elasticity spectrometer manufactured by IWAMOTO SEISAKUSYO.

If the complex elastic modulus E* is less than 45 kgf/cm$^2$, the belt rigidity becomes insufficient for steering stability, and the cut resistance of the belt cords during sharp cornering is decreased.

If the complex elastic modulus E* is more than 150 kgf/cm$^2$, it becomes difficult for the topping rubber to penetrate the cord.

Further, the buckling strength coefficient K of each of the belts is more than 80 and less than 180.

Here, the buckling strength coefficient K is defined by the cord count M per 5cm width divided by sine (theta). The angle (theta) is the belt cord angle with respect to the tyre equator.

If the buckling strength coefficient K is not more than 80, the cut resistance of the belt cord during sharp cornering and the steering stability are deteriorated.

If the buckling strength coefficient K is not less than 180, ride comfort is deteriorated, and the tyre weight is excessive.

Test tyres of size 195/70R14 having the structure shown in Fig.1 and specifications given in Table 1 were prepared and tested. The test results are also given in Table 1.

Penetration of the topping rubber into the belt cord was measured as follows:

Four belt cords were taken from the test tyre.

For each of the four belt cords, one of the three steel monofilaments therein was separated from the two others carefully so as not to remove the penetrated rubber using a sharp edged tool, and then the inner surfaces of the remaining two steel monofilaments were observed to determine whether the inner surfaces were exposed or not. Such determination was made every cord twisting pitch.

If the surface was exposed, then the topping rubber had not penetrated the part (pitch).

For each of the belt cords, the percentage of penetrated parts (twist pitches) was calculated from the following equation:

$$\frac{\text{the number of the penetrated pitches} \times 100}{\text{the whole number of the pitches included in the cord}}$$

From the calculated four values in each test tyre, the mean value thereof was obtained as the rubber penetration index for the tyre.

The resistance to corrosion of the steel belt cords of each of the test tyres was measured as follows:

Eight holes reaching to the radially outer belt were made in the inside of the test tyre, and some salt water was put into the tyre cavity. Then the tyre was run for 30,000 km at a speed of 60 km/h under 120 % of the standard tyre load (the maximum load specified in JIS). After the 30,000 km test, the area of the corroded part of the radially inner belt was measured as the resistance to corrosion, and indicated by an index based on that Reference tyre 2 is 100. Therefore, the smaller the index, the better the resistance.

The cut resistance was evaluated by the cut caused by sharp cornering of the test car. In Table 2, the cut resistance is indicated by an index based on that Reference tyre 2 is 100. The large the index, the better the resistance.

The steering stability and ride comfort were evaluated by a test driver into five ranks, wherein the rank three is standard. The larger the value, the better the performance.

4

TABLE 1

| Tire | Ref.1 | Ref.2 | Ref.3 | Ex.1 | Ex.2 | Ex.3 | Ex.4 | Ex.5 | Ex.6 | Ex.7 | Ex.8 |
|---|---|---|---|---|---|---|---|---|---|---|---|
| Cord twist | compact | compact | loose | compact | compact | compact | compact | compact | compact | compact | compact |
| Total no. of steel monofilaments | 5 | 3 | 3 | 3 | 3 | 3 | 3 | 3 | 3 | 3 | 3 |
| No. of waved monofilament | 0 | 0 | 0 | 1 | 1 | 1 | 1 | 1 | 1 | 1 | 2 |
| Dia. of steel monofilaments (mm) | 0.23 | 0.28 | 0.28 | 0.28 | 0.28 | 0.28 | 0.28 | 0.28 | 0.28 | 0.28 | 0.28 |
| Cord count (ends/5cm) | 37 | 42 | 42 | 42 | 47 | 32 | 50 | 42 | 42 | 42 | 42 |
| Cord elongation @ 5kgf load (%) | 0.12 | 0.13 | 0.43 | 0.173 | 0.173 | 0.173 | 0.173 | 0.173 | 0.173 | 0.320 | 0.173 |
| Topping rubber complex elastic modulus (kgf/sq.cm) | 68 | 68 | 68 | 68 | 68 | 68 | 68 | 38 | 160 | 68 | 68 |
| Buckling strength coefficient | --- | 140 | 140 | 140 | 156 | 76 | 181 | 140 | 140 | 140 | 140 |
| Belt cord weight (g/tire) | 750 | 650 | 660 | 650 | 727 | 495 | 773 | 650 | 650 | 650 | 650 |
| Rubber penetration (index) | 0 | 10 | 85 | 93 | 95 | 95 | 93 | 100 | 63 | 100 | 100 |
| Corrosion resistance | 120 | 100 | 25 | 27 | 26 | 28 | 25 | 15 | 42 | 25 | 20 |
| Cut resistance | 125 | 100 | 105 | 105 | 130 | 65 | 135 | 95 | 110 | 107 | 100 |
| Steering stability | 3.2 | 3.2 | 2.8 | 3.2 | 3.2 | 2.7 | 2.9 | 2.9 | 3.1 | 2.9 | 2.9 |
| Ride comfort | 2.8 | 3.0 | 3.2 | 3.2 | 2.9 | 3.2 | 2.7 | 3.1 | 3.0 | 3.0 | 3.0 |

**Claims**

1. A pneumatic tyre comprising a carcass (6) extending between bead portions (5) of the tyre, and a belt (9) disposed radially outside the carcass (6) under a tread (2), wherein the belt (9) comprises reinforcing cords (10) embedded in topping rubber at an angle (theta) to the tyre equator and each of the belt cords comprises three steel monofilaments (12), characterised in that the three steel monofilaments (12) include at least one waved steel monofilament (12A) and at least one unwaved steel monofilament (12B), said at least one waved steel monofilament (12A), said at least one unwaved steel monofilament (12B), and the remaining steel filament being compactly twisted together so as to make alternate contacting portions and noncontacting portions between said at least one waved steel monofilament (12A) and at least one of the remaining two steel monofilaments, and the gap (T) therebetween at each said noncontacting portion is not more than 0.6 times the diameter (d) of the waved steel monofilament (12A).

5

2.  A pneumatic tyre according to claim 1, characterised in that the diameter (d) of the waved steel monofilament is 0.2 to 0.35 mm.

3.  A pneumatic tyre according to claim 1 or 2, characterised in that the elongation of the belt cord under 5kgf load is not more than 0.3%.

4.  A pneumatic tyre according to claim 1, 2 or 3 characterised in that the topping rubber for the belt cords has a complex elastic modulus of 45 to 150 kgf/cm$^2$.

5.  A pneumatic tyre according to any of claims 1 to 4, characterised in that the buckling strength coefficient K of the belt (9) is more than 80 and less than 180, wherein the buckling strength coefficient K is defined as the belt cord count per 5cm width of the belt divided by sine (theta), the angle (theta) is the belt cord angle to the tyre equator.

6.  A pneumatic tyre according to any of claims 1 to 5, characterised in that in each said belt cord (10), the pitches of the waving of said at least waved steel monofilament are less than the pitches of the cord twist.

**Patentansprüche**

1.  Ein Luftreifen mit einer Karkasse (6), die sich zwischen Wulstteilen (5) des Reifens erstreckt, und einem Gürtel (9), der radial außerhalb der Karkasse (6) unter einer Lauffläche (2) angeordnet ist, worin der Gürtel (9) verstärkende Korde (10) umfaßt, die in Abdeckgummi bei einem Winkel (theta) zum Reifenäquator eingebettet sind und jeder der Gürtelkorde drei Stahlmonofilamente (12) umfaßt, dadurch gekennzeichnet, daß die drei Stahlmonofilamente (12) zumindest ein gewelltes Stahlmonofilament (12A) und zumindest ein ungewelltes Stahlmonofilament (12B) umfassen, wobei das zumindest eine gewellte Stahlmonofilament (12A), das zumindest eine ungewellte Stahlmonofilament (12B) und das verbleibende Stahlfilament kompakt zusammengedreht werden, um so alternierend berührende Teile und nicht berührende Teile zwischen dem zumindest einen gewellten Stahlmonofilament (12A) und dem zumindest einen der verbleibenden zwei Stahlmonofilamente herzustellen, und die Lücke (T) dazwischen bei jedem des nichtberührenden Teils nicht größer als 0,6 mal der Durchmesser (d) des gewellten Stahlmonofilamentes (12A) ist.

2.  Ein Luftreifen nach Anspruch 1, dadurch gekennzeichnet, daß der Durchmesser (d) des gewellten Stahlmonofilamentes 0,2 bis 0,35 mm beträgt.

3.  Ein Luftreifen nach Anspruch 1 oder 2, dadurch gekennzeichnet, daß die Dehnung des Gürtelkordes unter einer Last von 5 kp nicht mehr als 0,3 % beträgt.

4.  Ein Luftreifen nach Anspruch 1, 2 oder 3, dadurch gekennzeichnet, daß das Abdeckgummi für die Gürtelkorde einen komplexen Elastizitätsmodul von 45 bis 150 kp/cm$^2$ aufweist.

5.  Ein Luftreifen nach einem der Ansprüche 1 bis 4, dadurch gekennzeichnet, daß der Beulfestigkeitsbeiwert K des Gürtels (9) größer als 80 und kleiner als 180 ist, wobei der Beulfestigkeitskoeffizient K als der Gürtelkordzählwert pro 5 cm Breite des Gürtels geteilt durch den Sinus (theta) definiert ist und der Winkel (theta) der Gürtelkordwinkel zum Reifenäquator ist.

6.  Ein Luftreifen nach einem der Ansprüche 1 bis 5, dadurch gekennzeichnet, daß in jedem Gürtelkord (10) die Abstände der Wellung des zumindest gewellten Stahlmonofilamentes kleiner als die Abstände der Korddrehung sind.

**Revendications**

1.  Pneumatique comprenant une carcasse (6) disposée entre les parties de talon (5) du pneumatique, et une ceinture (9) disposée radialement à l'extérieur de la carcasse (6) sous une bande de roulement (2), dans lequel la ceinture (9) comporte des câblés d'armature (10° enrobés dans un caoutchouc d'enrobage et faisant un angle ($\theta$) avec l'équateur du pneumatique, chacun des câblés de ceinture comprenant trois monofilaments d'acier (12), caractérisé en ce que les trois monofilaments d'acier (12) comportent au moins un monofilament ondulé d'acier (12A) et au moins un monofilament non ondulé d'acier (12B), le monofilament ondulé d'acier au moins (12A), le monofilament d'acier non ondulé au moins (12B) et le filament d'acier restants étant retordus de manière serrée les uns avec les autres afin qu'ils forment des parties de contact et des parties sans contact qui alternent entre le monofilament d'acier ondulé au moins (12A) et les deux monofilaments d'acier restant au moins, et l'espace (T) compris entre les filaments à chacune des parties sans contact ne dépasse pas 0,6 fois le diamètre (d) du monofilament d'acier ondulé (12A).

2. Pneumatique selon la revendication 1, caractérisé en ce que le diamètre (d) du monofilament d'acier ondulé est compris entre 0,2 et 0,35 mm.

3. Pneumatique selon la revendication 1 ou 2, caractérisé en ce que l'allongement du câblé de ceinture sous une charge de 49 N (5 kgf) ne dépasse pas 0,3 %.

4. Pneumatique selon la revendication 1, 2 ou 3, caractérisé en ce que le caoutchouc d'enrobage des câblés de ceinture a un module complexe d'élasticité compris entre 4,5 et 15 MPa (45 et 150 kgf/cm$^2$).

5. Pneumatique selon l'une quelconque des revendications 1 à 4, caractérisé en ce que le coefficient K de résistance au flambage de la ceinture (9) est supérieur à 80 et inférieur à 180, le coefficient K de résistance au flambage étant défini comme étant le nombre de câblés d'acier par largeur de 5 cm de la ceinture divisé par sin($\theta$), l'angle ($\theta$) étant l'angle des câblés de ceinture avec l'équateur du pneumatique.

6. Pneumatique selon l'une quelconque des revendications 1 à 5, caractérisé en ce que, dans chaque câblé de ceinture (10), les pas d'ondulation du monofilament d'acier ondulé au moins sont inférieurs au pas de torsion des câblés.

Fig.1

EP 0 515 178 B1

## Fig.2

## Fig.3

# Fig. 4

(a)

(b)

# Fig.5

## (a)

## (b)